# EUROPEAN PATENT APPLICATION

(11) **EP 1 582 550 A1**
(43) Date of publication of application: **05.10.2005**
(21) Application number: 05004465.0
(22) Date of filing: 01.03.2005
(51) Int. Cl.: C08G 73/02, C09K 11/06

(54) **Polymer for organic el element, composition for organic el element, and organic el element**

(30) Priority: 26.03.2004 JP 2004092023
(71) Applicant: JSR Corporation, Tokyo (JP)
(72) Inventor: Yasuda, Hiroyuki, Chuo-ku Tokyo (JP); Oh, Hyun-Shik, c/o Pharmaceutical Exam. Div., Apt920 Dunsan-dong Seo-gu Daejon 302-701 (KR); Shiraki, Shinji, Chuo-ku Tokyo (JP)
(74) Representative: TBK-Patent

(57) **Abstract**

Disclosed is a polymer comprising a repeating unit represented by the following structural formula (1): 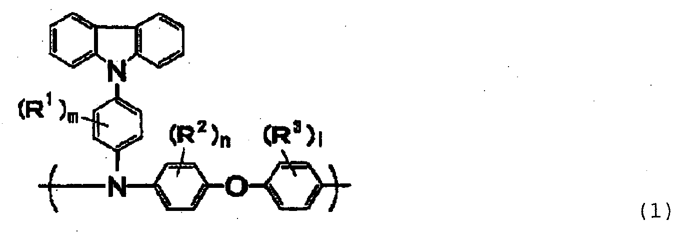 wherein R¹, R² and R³ are each a monovalent organic group, l is an integer of 0 to 4, m is an integer of 0 to 4, and n is an integer of 0 to 4.

A composition comprising the polymer and a triplet luminescent metal complex compound, and an organic EL device having a luminescent layer formed from the composition are also disclosed. The polymer is capable of forming an organic EL layer having high luminance by a wet process. The organic EL device has a luminescent layer having high luminance.

## Description

### FIELD OF THE INVENTION

The present invention relates to a polymer used for an organic electroluminescent (EL) element, a composition for organic EL device and an organic EL device.

### BACKGROUND OF THE INVENTION

Since organic electroluminescent elements (also referred to as "organic EL devices" hereinafter) have excellent properties, such as capability of being driven by a direct-current voltage, wide angle of visual field and high visibility because of self-luminescent elements, and high response speed, they are expected as display elements of the next generation, and studies of the elements have been actively made.

As such organic EL devices, there are known those having a single-layer structure wherein a luminescent layer is formed between an anode and a cathode and those having a multi-layer structure such as those further having a hole transport layer between the anode and the luminescent layer and those further having an electron transport layer between the cathode and the luminescent layer. Any of these organic EL devices emits light by a mechanism that an electron injected from the cathode and a hole (electron hole) injected from the anode are recombined in the luminescent layer.

The luminescent layer to constitute the organic EL device or the electric charge transport layer to transport electric charge such as electron or hole is a functional organic material layer made of an organic material. As a process for forming the functional organic material layer, a dry process wherein the layer is formed by vacuum deposition or a wet process wherein the layer is formed by applying a solution of an organic material and drying the applied solution is known.

In the dry process of the above processes, mass production is difficult because of complicated steps, and it is also difficult to form a functional organic material layer having a large area. In contrast therewith, in the wet process, it is easy to cope with the mass production because the steps are relatively simple, and if an ink jet process is used, it is also easy to form a functional organic material layer having a large area. Therefore, the wet process is more advantageous to the industrial production as compared with the dry process.

The luminescent layer of the organic EL device is considered to need high luminous efficiency. In order to realize high luminous efficiency, an attempt to use energy of molecules in a triplet state that is an excited state for the luminescence of the organic EL device has been made in recent years.

It has been reported that the external quantum efficiency of the organic EL device having such a structure exceeds 5% that is conventionally considered to be a critical value and goes up to even 8% (see, for example, non-patent document 1).

The organic EL device described in the non-patent document 1, however, is constituted of a material of a low molecular weight and is formed by a dry process such as deposition, so that there is a problem that this organic EL device has low physical endurance and low heat endurance.

As the organic EL device using energy of molecules in the triplet state, an organic EL device using a composition consisting of an iridium complex compound, polyvinylcarbazole and oxadiazole and having a luminescent layer formed by a wet process has been proposed (see, for example, patent document 1).

In the organic EL device of the patent document 1, however, oxadiazole of a low molecular weight is contained in the luminescent layer, so that there is a problem that stability to Joule heat generated when the element is continuously driven is low and stable luminescence is not obtained.

Non-patent document 1: Applied Physics Letters, Vol. 75, p. 4 (1999)

Patent document 1: Japanese Patent Laid-Open Publication No. 257076/2001

### OBJECT OF THE INVENTION

The present invention has been made under such circumstances as described above, and it is an object of the invention to provide a polymer for organic EL device which is capable of easily forming a luminescent layer of thin film by a wet process and by which an organic EL device having high luminance can be obtained, and a composition for organic EL device containing the polymer.

It is another object of the invention to provide an organic EL device having high luminance.

### SUMMARY OF THE INVENTION

The polymer for organic EL device according to the present invention comprises a repeating unit represented by the following structural formula (1) and is used to constitute an organic EL device. 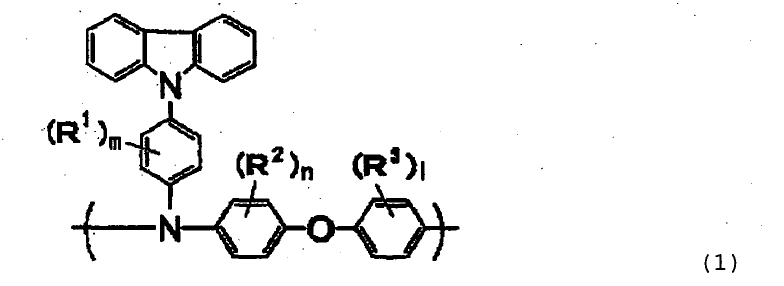 wherein R¹, R² and R³ are each a monovalent organic group, 1 is an integer of 0 to 4, m is an integer of 0 to 4, and n is an integer of 0 to 4.

The polymer for organic EL device preferably has a weight-average molecular weight in terms of polystyrene, as measured by gel permeation chromatography, of 2000 to 1000000.

The composition for organic EL device according to the present invention comprises the above-mentioned polymer for organic EL device and a triplet luminescent metal complex compound.

The organic EL device according to the present invention has a luminescent layer formed from the above-mentioned composition for organic EL device.

The organic EL device preferably further has a hole block layer.

### BRIEF DESCRIPTION OF THE DRAWINGS

Fig. 1 is a sectional schematic view showing an example of constitution of an organic EL device of the present invention.
Fig. 2 is a view of emission spectra of an organic EL device obtained in Example 1 and a reference organic EL device obtained in Reference Example 1.
   1: transparent substrate
   2: anode
   3: hole injection transport layer
   4: luminescent layer
   5: electron injection layer
   6: cathode
   7: direct-current voltage
   8: hole block layer.

### DETAILED DESCRIPTION OF THE INVENTION

An embodiment of the present invention is described in detail hereinafter.

### Polymer for organic EL device

The polymer for organic EL device of the invention is a polymer comprising a repeating unit represented by the aforesaid structural formula (1).

In the structural formula (1), R¹, R² and R³ are each a monovalent organic group, and they may be the same or different.

R¹, R² and R³ are each, for example, an alkyl group of 1 to 8 carbon atoms, an alkoxy group of 1 to 8 carbon atoms or an aryl group of 6 to 12 carbon atoms.

1, m and n are each independently an integer of 0 to 4, and in particular, 1, m and n are each preferably 0. That 1, m and n are each 0 means that no substituent is bonded but a hydrogen atom is bonded.

The weight-average molecular weight of the polymer for organic EL device in terms of polystyrene, as measured by gel permeation chromatography, is in the range of preferably 2000 to 1000000, particularly preferably 3000 to 100000. If the weight-average molecular weight is less than the lower limit of the above range, the resulting thin film is liable to have insufficient heat resistance, stability and mechanical strength. If the weight-average molecular weight is more than the upper limit of the above range, solution viscosity of a composition containing the polymer is too high, and therefore, operation properties of the composition are liable to be lowered in the production of an organic EL device.

The polymer for organic EL device of the invention can be synthesized by condensation reaction of a N-(4-aminophenyl)carbazole compound obtained by reduction reaction of N-(4-nitrophenyl)carbazole with a diphenyl ether having two halogen groups, such as 4,4'-dibromodiphenyl ether.

The diphenyl ether having two halogen groups is preferably a compound wherein the halogen group is a bromine (Br) group or an iodine (I) group.

The polymerization reaction product may be used as it is, but it is preferable to use it after removing a low-molecular weight component by preparative gel permeation chromatography or the like. By performing such a post treatment, a polymer capable of forming an organic EL device having stable and high luminous efficiency can be obtained.

Further, it is preferable to substitute ends of the resulting polymer by an aromatic compound, and owing to this treatment, a polymer more excellent in luminous efficiency and endurance can be obtained.

The polymer for organic EL device thus obtained can be favorably used as a material for forming a luminescent layer of an organic EL device by combining it with a luminescent material having phosphorescence properties.

### Composition for organic EL device

The composition for organic EL device of the invention comprises the above-described polymer for organic EL device and a triplet luminescent metal complex compound.

Examples of the triplet luminescent metal complex compounds include an iridium complex compound, a platinum complex compound, a palladium complex compound, a rubidium complex compound, an osmium complex compound and a rhenium complex compound. Of these, an iridium complex compound is preferable.

The iridium complex compound employable herein is, for example, a complex compound of iridium with a nitrogen atom-containing aromatic compound, such as phenylpyridine, phenylpyrimidine, bipyridyl, 1-phenylpyrazole, 2-phenylquinoline, 2-phenylbenzothiazole, 2-phenyl-2-oxazoline, 2,4-diphenyl-1,3,4-oxadiazole, 5-phenyl-2-(4-pyridyl)-1,3,4-oxadiazole or a derivative thereof.

Examples of such iridium complex compounds include compounds represented by the following formulas (1) to (3).

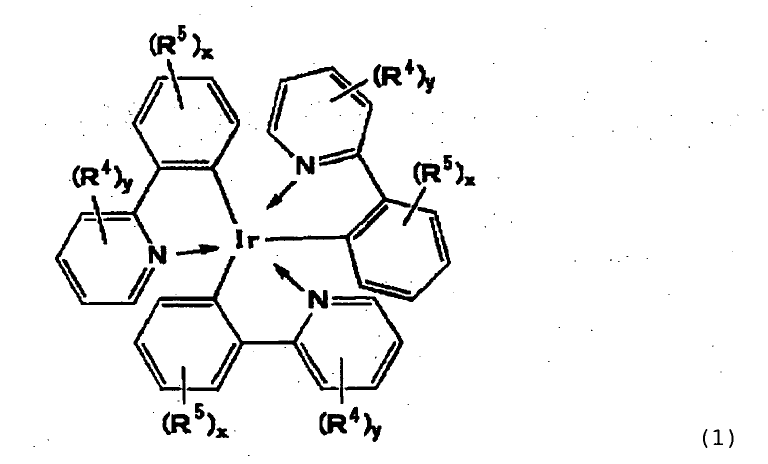

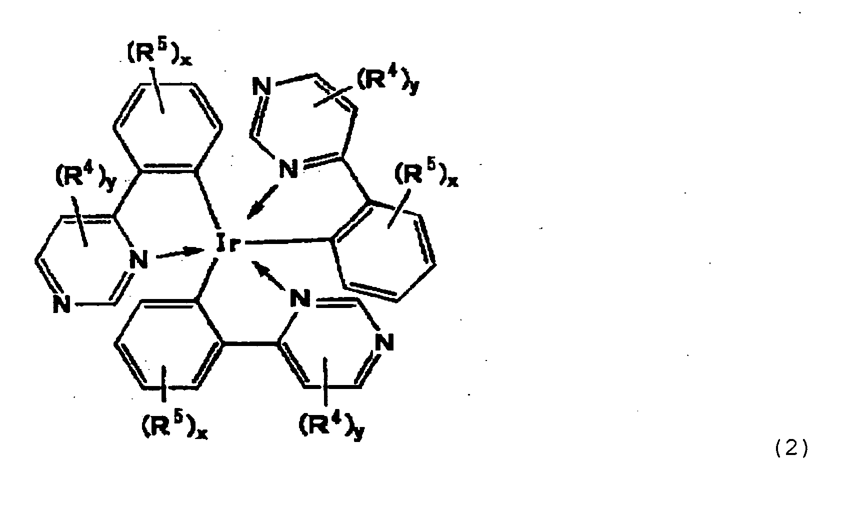

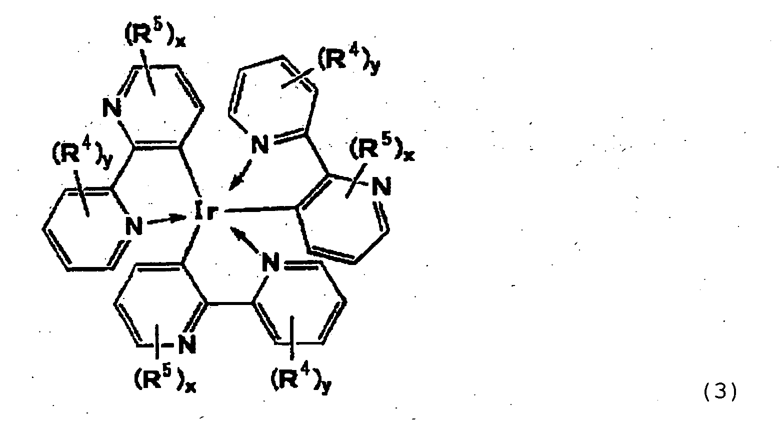

In the formulas (1) to (3), R⁴ and R⁵ are each a fluorine atom, an alkyl group or an aryl group and may be the same as or different from each other, x is an integer of 0 to 4, and y is an integer of 0 to 4.

Examples of the alkyl groups include methyl, ethyl, isopropyl, t-butyl, n-butyl, isobutyl, hexyl and octyl. Examples of the aryl groups include phenyl, tolyl, xylyl, biphenyl and naphthyl.

Of the above compounds, an iridium complex compound represented by the formula (1) (also referred to as an "iridium complex compound (1)" hereinafter) is particularly preferably employed.

The iridium complex compound (1) can be synthesized by allowing a compound represented by the following formula (4) to react with a compound represented by the following formula (5) in the presence of a polar solvent, and in this case, it is important that the content of the resulting impurity compound (6) represented by the following formula (6) is not more than 1000 ppm.

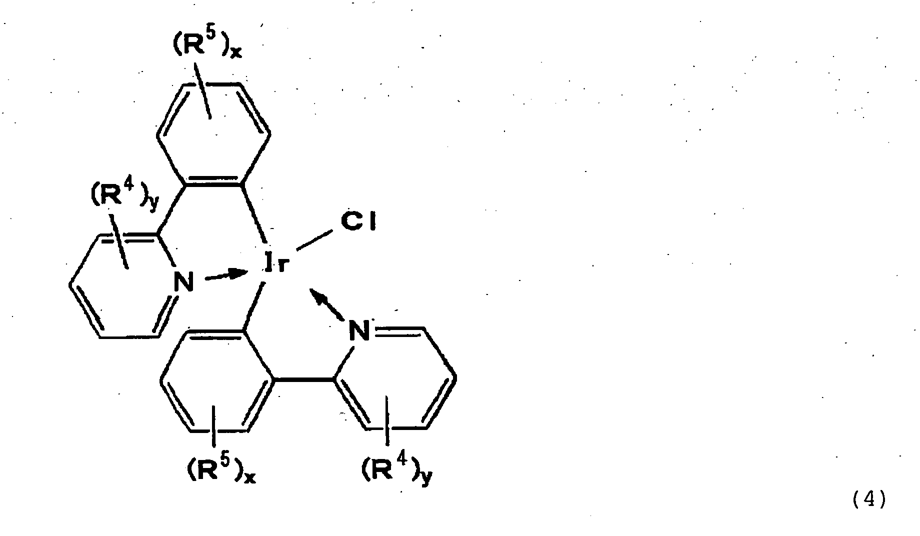

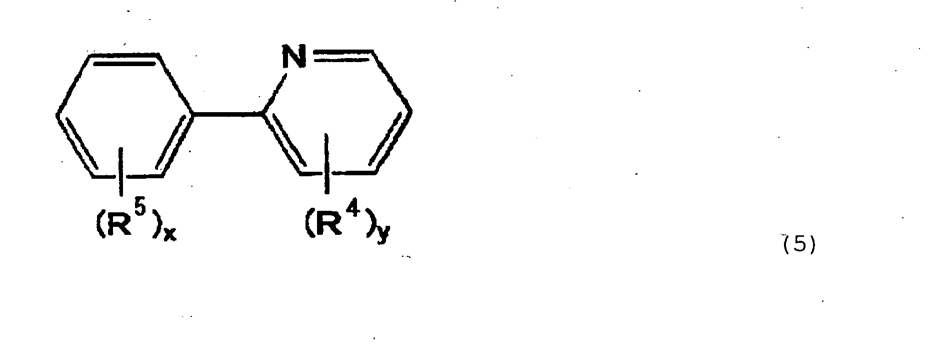

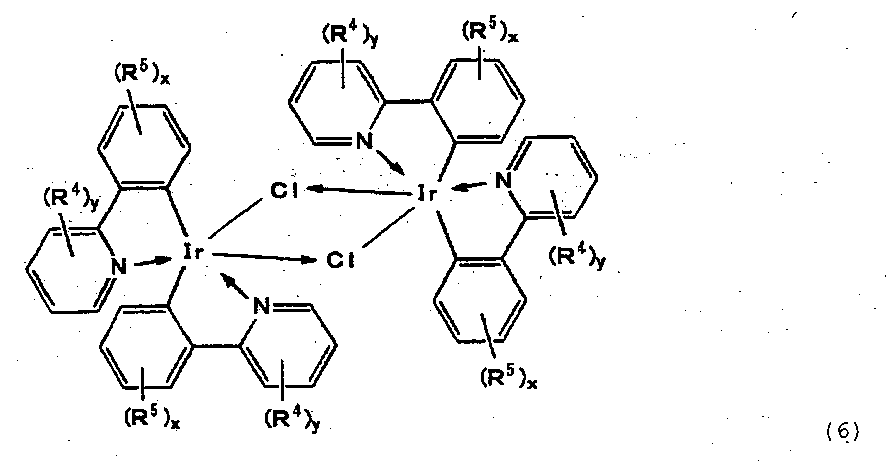

In the formulas (4) to (6), R⁴ and R⁵ are each the same as in the formula (1), x is an integer of 0 to 4, and y is an integer of 0 to 4.

The iridium complex compound (1) having a content of the impurity compound (6) of not more than 1000 ppm can be prepared by purifying the reaction product obtained by the above synthesis reaction.

If the content of the impurity compound (6) in the iridium complex compound (1) exceeds 1000 ppm, luminescence performance of the iridium complex compound (1) is inhibited, and hence, it tends to become difficult to obtain an organic EL device having high luminance.

The content of the triplet luminescent metal complex compound in the composition for organic EL device of the invention is in the range of preferably 0.1 to 30 parts by mass, more preferably 0.5 to 10 parts by mass, based on 100 parts by mass of the polymer for organic EL device. If the content of the metal complex is less than the lower limit of the above range, it tends to become difficult to obtain sufficient luminescence. If the content of the metal complex is more than the upper limit of the above range, a concentration quenching phenomenon that brightness of luminescence is rather decreased tends to occur.

To the composition for organic EL device of the invention, arbitrary additives such as an electron transporting low-molecular weight compound can be added when needed.

Examples of the electron transporting low-molecular weight compounds include metal complexes, such as tris(8-hydroxyquinolino) aluminum (Alq3), oxadiazole compounds, such as 2-(4-biphenyl)-5-(4-tert-butylphenyl)-1,3,4-oxadiazole (PBD), and triazole compounds, such as 1-phenyl-2-biphenyl-5-tert-butylphenyl-1,3,4-triazole (TAZ). In particular, oxadiazole compounds, such as 2-(4-biphenyl)-5-(4-tert-butylphenyl)-1,3,4-oxadiazole (PBD), are preferably employed.

The content of the electron transporting low-molecular weight compound is preferably in the range of 10 to 40 parts by mass based on the total 100 parts by mass of the polymer for organic EL device and the triplet luminescent metal complex.

The composition for organic EL device of the invention is usually prepared by dissolving the polymer for organic EL device and the metal complex in an organic solvent. By applying the composition onto a surface of a substrate on which a luminescent layer should be formed and then removing the organic solvent from the resulting coating film, a luminescent layer of an organic EL device can be formed.

The organic solvent used for preparing the composition is not specifically restricted provided that it is capable of dissolving the polymer and the complex used. Examples of the organic solvents include halogenated hydrocarbons, such as chloroform, chlorobenzene and tetrachloroethane; amide type solvents, such as dimethylformamide and N-methylpyrrolidone; and other solvents, such as cyclohexanone, ethyl lactate, propylene glycol methyl ether acetate, ethyl ethoxypropionate and methyl amyl ketone. These organic solvents can be used singly or in combination of two or more kinds.

Of the above solvents, an organic solvent having a boiling point of about 70 to 200°C is preferably employed. When an organic solvent having a boiling point of the above range is employed, the resulting composition has a proper evaporation rate, and hence, a thin film having uniform thickness can be obtained.

Although the amount of the organic solvent used varies depending upon the type of the polymer for organic EL device and the type of the metal complex, the organic solvent is usually used in an amount of 90 to 99.5% by mass based on the total mass of the composition.

As a means to apply the composition, there can be utilized, for example, spin coating, dipping, roll coating, ink jetting or printing.

Although the thickness of the luminescent layer formed is not specifically restricted, it is in the range of usually 10 to 200 nm, preferably 20 to 100 nm.

From an organic EL device using the composition for organic EL device, sufficiently high luminance can be obtained, and besides, the luminescent layer can be easily formed by a wet process such as ink jetting.

### Organic EL device

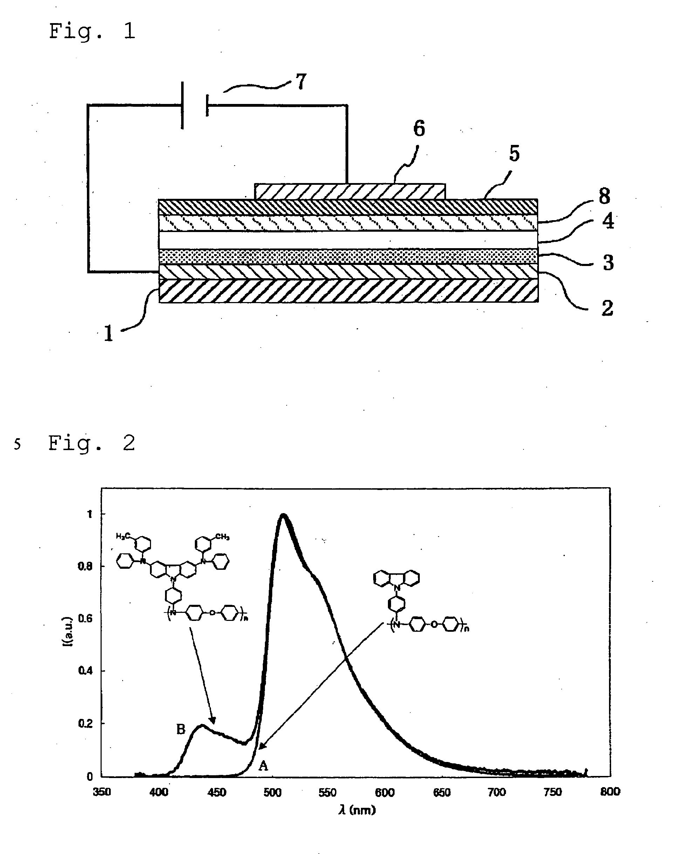

Fig. 1 is a sectional schematic view showing an example of constitution of the organic EL device of the invention.

The organic EL device indicated by this example has the following constitution. On a transparent substrate 1, an anode 2 as an electrode for supplying a hole is provided by the use of, for example, a transparent conductive film. On the anode 2, a hole injection transport layer 3, a luminescent layer 4, a hole block layer 8 and an electron injection layer 5 are provided in this order from the bottom. On the electron injection layer 5, a cathode 6 that is an electrode for supplying an electron is provided. Owing to this constitution, the anode 2 and the cathode 6 are electrically connected to a direct-current power source 7.

The transparent substrate 1 employable in the invention is, for example, a transparent resin substrate or a glass substrate such as a quartz glass substrate.

As a material to form the anode 2, a transparent material having a large work function, e.g., a transparent material having a work function of 4 eV or more is preferably employed. The "work function" used herein means a minimum quantity of work necessary for taking out an electron from a solid into vacuum. As the anode 2, for example, an ITO (indium tin oxide) film, a tin oxide (SnO₂) film, a copper oxide (CuO) film or a zinc oxide (ZnO) film can be employed.

The hole injection transport layer 3 is a layer that is provided in order to efficiently supply a hole to the luminescent layer 4, and functions to receive a hole from the anode 2 and to transport it to the luminescent layer 4. As a material to form the hole injection transport layer 3, for example, an electric charge injection transport material such as poly(3,4-ethylenedioxythiophene)-polystyrenesulfonate can be preferably employed. The thickness of the hole injection transport layer 3 is, for example, 10 to 200 nm.

The luminescent layer 4 functions to bond an electron to a hole and to emit the resulting bond energy as light, and this luminescent layer 4 is formed from the aforesaid composition for organic EL device. Although the thickness of the luminescent layer 4 is not specifically restricted, it is usually in the range of 5 to 200 nm.

The hole block layer 8 functions to inhibit entering of a hole into the electron injection layer 5, said hole being supplied to the luminescent layer 4 though the hole injection transport layer 3, and to accelerate recombination of a hole with an electron in the luminescent layer 4 to thereby enhance luminous efficiency.

As a material to form the hole block layer 8, for example, 2,9-dimethyl-4,7-diphenyl-1,10-phenanthroline (Bathocuproine, BCP) represented by the following formula (1) or 1,3,5-tri(phenyl-2-benzimidazolyl)benzene (TPBI) represented by the following formula (2) can be preferably employed.

The thickness of the hole block layer 8 is, for example, 10 to 30 nm.

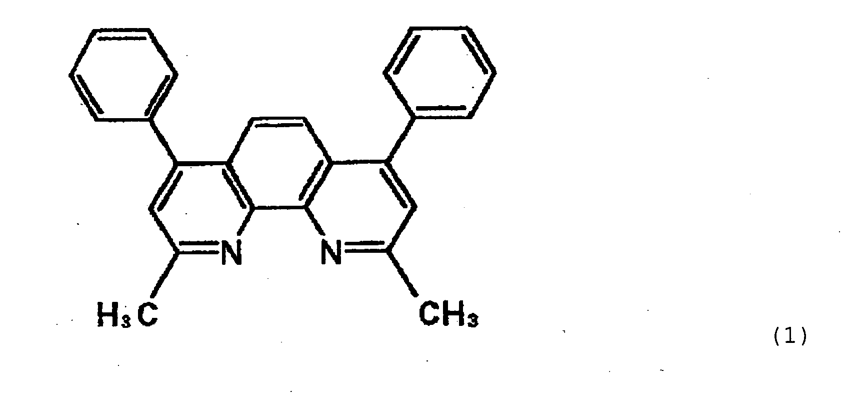

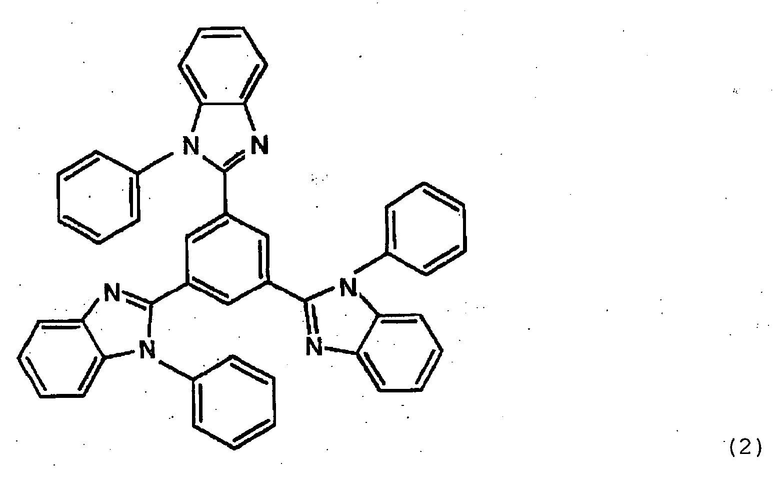

The electron injection layer 5 functions to transport the electron received from the cathode 6 to the luminescent layer 4 through the hole block layer 8. As a material to form the electron injection layer 5, a codeposition system (BPCs) of a Bathophenanthroline material and cesium is preferably employed. Examples of other materials employable in the invention include alkali metals, compounds of alkali metals (e.g., lithium fluoride, lithium oxide), alkaline earth metals, and compounds of alkaline earth metals (e.g., magnesium fluoride, strontium fluoride). The thickness of the electron injection layer 5 is, for example, 0.1 to 10 nm.

As a material to form the cathode 6, a material having a small work function, e.g., a material having a work function of 4 eV or less is employed. As the cathode 6, for example, a metal film made of aluminum, calcium, magnesium or indium or an alloy film of,these metals can be employed.

Although the thickness of the cathode 6 varies depending upon the type of the material, it is in the range of usually 10 to 1,000 nm, preferably 50 to 200 nm.

In the present invention, the organic EL device is produced in, for example, the following manner.

First, the anode 2 is formed on the transparent substrate 1.

The anode 2 can be formed by vacuum deposition, sputtering or the like. Further, a commercially available material wherein a transparent conductive film such as an ITO film is formed on a surface of a transparent substrate such as a glass substrate can also be used as it is.

On the anode 2 thus formed, the hole injection transport layer 3 is formed.

The hole injection transport layer 3 can be formed by, for example, dissolving an electric charge injection transport material in a solvent to prepare a solution, applying the solution onto a surface of the anode 2 and removing the solvent from the resulting coating film.

Subsequently, the luminescent layer 4 is formed on the hole injection transport layer 3.

The-luminescent layer 4 is formed by applying the composition for organic EL device of the invention onto the hole injection transport layer 3 and subjecting the resulting coating film to heat treatment.

In order to apply the composition, spin coating, dipping, ink jetting, printing or the like can be utilized.

Then, on the luminescent layer 4, the hole block layer 8, the electron injection layer 5 and the cathode 6 are formed in this order from the bottom, whereby the organic EL device having constitution shown in Fig. 1 is obtained.

For forming the hole block layer 8, the electron injection layer 5 and the cathode 6, a dry process such as vacuum deposition can be utilized.

When a direct-current voltage from the direct current power source 7 is applied between the anode 2 and the cathode 6 in the organic EL device, luminescence of the luminescent layer 4 occurs, and this light is emitted outside through the hole injection transport layer 3, the anode 2 and the transparent substrate 1.

In the organic EL device having the above constitution, the luminescent layer 4 is formed from the composition for organic EL device of the invention, and therefore, high luminance is obtained.

Further, since the hole block layer 8 is provided, bonding of a hole from the anode to an electron from the cathode can be realized with high efficiency, and as a result, high luminance and high luminous efficiency are obtained.

### EFFECT OF THE INVENTION

According to the polymer for organic EL device and the composition for organic EL device of the invention, a thin film can be easily formed by a wet process, and the thin film can be used as a luminescent layer of an organic EL device having high luminance.

According to the organic EL device of the invention, luminescence of high luminance can be obtained.

### EXAMPLES

The present invention is further described with reference to the following examples, but it should be construed that the invention is in no way limited to those examples.

### Example 1

### (1) Preparation of polymer for organic EL device

In 10 ml of mesitylene, 0.25.8 g (1 mmol) of N-(4-aminophenyl) carbazole represented by the following chemical formula (3) ; 0.328 g (1 mmol) of 4,4'-dibromodiphenyl ether, 0.03 g (0.03 mmol) of tris(dibenzylideneacetone)dipalladium, 0.05 g (0.09 mmol) of diphenylphosphinoferrocene (DPPF) and 0.29 g (3 mmol) of t-butoxysodium were dissolved, and the solution was heated to 140°C, followed by polymerization for 35 hours.

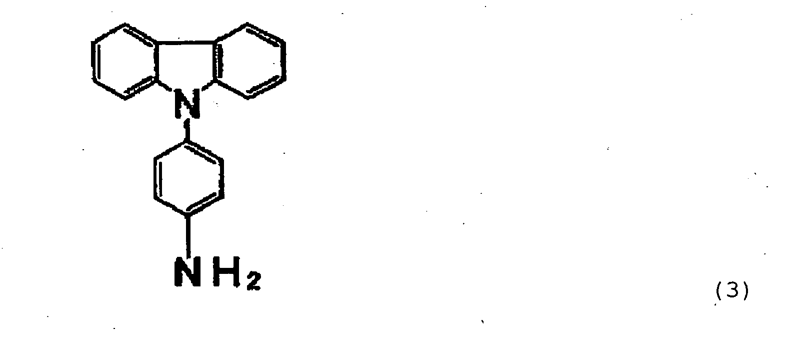

Thereafter, 0.08 g (0.5 mmol) of diphenylamine was added at the same temperature, and the reaction was performed for 4 hours. Then, 0.16 g (1 mmol) of bromobenzene was added, and the reaction was further performed for 4 hours, whereby the polymer ends were substituted.

Chloroform was added to the resulting solution, and this solution was washed with an ethylenediamine aqueous solution. The resulting organic layer was dried over anhydrous magnesium sulfate and evaporated. Thereafter, reprecipitation with acetone was carried out to obtain 0.27 g of a polymer for organic EL device. This polymer is referred to as a "polymer A" hereinafter.

The polymer A was a polymer having a diphenylamino group at one end, having a phenyl group at the other end, comprising a repeating unit represented by the structural formula (1) wherein 1, m and n are each 0, and having a weight-average molecular weight (in terms of polystyrene), as measured by gel permeation chromatography, of 16,000.

### (2) Preparation of composition for organic EL device

To a mixture of 10 g of the polymer A and an iridium complex Ir(ppy)₃ (compound of the formula (1) wherein x is 0 and y is 0) in an amount of 6% by mol based on the polymer A, cyclohexanone was added so that the solids concentration should be 3% by mass, and the resulting solution was filtered through a filter having a pore size of 2.52 µm to obtain a composition for organic EL device. This composition is referred to as a "composition A" hereinafter.

### (3) Preparation of organic EL device

An organic EL device having a luminescent layer comprising the polymer A and having constitution shown in Fig. 1 was fabricated.

First, a glass transparent substrate having on its surface a transparent conductive film made of ITO was prepared. This substrate was subjected to ultrasonic cleaning using a neutral detergent, ultra-pure water, isopropyl alcohol, ultra-pure water and acetone in this order and then ultraviolet-ozone (UV/O₃) cleaning was carried out.

The transparent conductive film of the substrate was coated with a solution of poly(3,4-ethylenedioxythiophene)-polystyrenesulfonate (PEDOT/PSS) by spin coating, and thereafter, the resulting coating film having a thickness of 65 nm was dried at 250°C for 30 minutes in a nitrogen atmosphere to form a hole injection transport layer.

Subsequently, the surface of the resulting hole injection transport layer was coated with the composition A by spin coating, and the resulting coating film having a thickness of 40 nm was dried at 150°C for 10 minutes in a nitrogen atmosphere to form a luminescent layer.

Then, in a vacuum apparatus having been pressure-reduced to not more than 1×10⁻⁴ Pa, Bathocuproine was deposited in a thickness of 30 nm on a surface of the luminescent layer to form a hole block layer. Then, on the hole block layer, lithium fluoride was deposited in a thickness of 0.5 nm to form an electron injection layer. Then, on the electron injection layer, calcium and aluminum were further deposited in a thickness of 30 nm and 100 nm, respectively, to form a cathode. Thereafter, sealing with a glass material was carried out to prepare an organic EL device A.

### (4) Evaluation of organic EL device

In the resulting organic EL device, a direct-current voltage was applied between the anode made of the transparent conductive film and the cathode made of aluminum in such a manner that the voltage value is gradually increased. As a result, light emission (luminescence) began at a voltage of 3.9 V, and luminescence of extremely high luminance, i.e., maximum luminance of 10200 cd/m², was obtained. An emission spectrum of the element is as indicated by a curve A shown in Fig. 2, and particular luminescence data are as shown in Table 1.

It can be seen from the results of Fig. 2 and Table 1 that the organic EL device of the invention having a luminescent layer constituted of the polymer for organic EL device and the iridium complex compound that is a triplet luminescent material gave luminescence of high luminance. The luminescent layer of this organic EL device can be easily formed by a wet process.

### Reference Example 1

### (1) Preparation of reference polymer

In 10 ml of mesitylene, 0.62 g (1 mmol) of p-(3,6-bis(phenyl-m-tolylamino)-N-carbazolyl)aniline represented by the following chemical formula (4), 0.328 g (1 mmol) of 4,4'-dibromodiphenyl ether, 0.03 g (0.03 mmol) of tris(dibenzylideneacetone)dipalladium, 0.05 g (0.09 mmol) of diphenylphosphinoferrocene (DPPF) and 0.29 g (3 mmol) of t-butoxysodium were dissolved, and the solution was heated to 140°C, followed by polymerization for 35 hours.

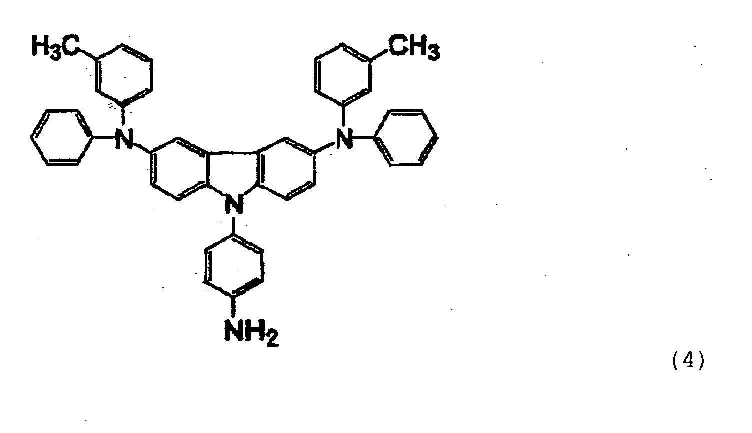

Thereafter, 0.08 g (0.5 mmol) of diphenylamine was added at the same temperature, and the reaction was performed for 4 hours. Then, 0.16 g (1 mmol) of bromobenzene was added, and the reaction was further performed for 4 hours, whereby the polymer ends were substituted.

Chloroform was added to the resulting solution, and this solution was washed with an ethylenediamine aqueous solution. The resulting organic layer was dried over anhydrous magnesium sulfate, and the organic solvent was removed by vacuum distillation. Thereafter, reprecipitation with acetone was carried out to obtain 0.32 g of a reference polymer. This polymer is referred to as a "polymer B" hereinafter.

The polymer B was a polymer having a diphenylamino group at one end, having a phenyl group at the other end, comprising a repeating unit represented by the following structural formula (2), and having a weight-average molecular weight (in terms of polystyrene), as measured by gel permeation chromatography, of 16,000.

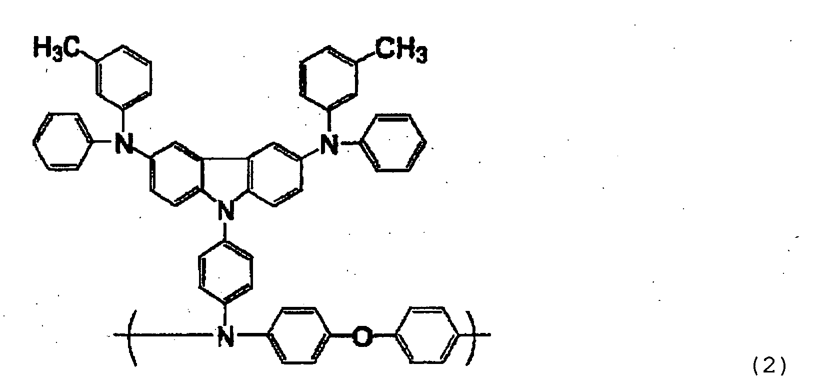

### (2) Preparation and evaluation of organic EL device

A composition for organic EL device was obtained in the same manner as in Example 1, except that the polymer B for reference was used instead of the polymer A. Then, a reference organic EL device B was fabricated in the same manner as in Example 1, except that the resulting composition was used instead of the composition A.

The reference organic EL device B was evaluated in the same manner as in Example 1. As a result, an emission spectrum of the element is as indicated by a curve B shown in Fig. 2, and particular luminescence data are as shown in Table 1. That is to say, light emission (luminescence) began at a voltage of 4.9 V, and the maximum luminance was 150 cd/m².

**Table 1**

| | Minimum luminescence voltage (V) | Maximum luminance (cd/m²) | Maximum luminance voltage (V) | Luminous efficiency (lm/W) [V] | Luminous efficiency (cd/A) [V] |
|---|---|---|---|---|---|
| Ex. 1 | 3.9 | 10200 | 10.0 | 3.3[6.5] | 6.9[6.5] |
| Ref. Ex. 1 | 4.9 | 150 | 12.0 | 0.1[8.0] | 0:3[8.0] |

It is apparent from the spectrum of Fig. 2 that according to the organic EL device A of Example 1, luminescence derived from the iridium complex compound is obtained. Further, it is apparent from the results in Table 1 that according to the organic EL device A of Example 1, the maximum luminance is remarkably high and the luminous efficiency is high.

On the other hand, it is understood from the spectrum of Fig. 2 that according to the reference organic EL device B of Reference Example 1, light in a state where an emission spectrum derived from the polymer component and an emission spectrum derived from the iridium complex compound are mixed is emitted. Further, it is understood from the results in Table 1 that according to the reference organic EL device B of Reference Example 1, the maximum luminance is low.

Because the composition for organic EL device of the invention comprises a specific polymer and a triplet luminescent metal complex compound, the luminescent layer can be easily formed by a wet process, and besides, an organic EL device having high luminance is obtained. The organic EL device of the invention has a luminescent layer formed from the above composition for organic EL device, and hence, luminescence of high luminance can be obtained.

Disclosed is a polymer comprising a repeating unit represented by the following structural formula (1): 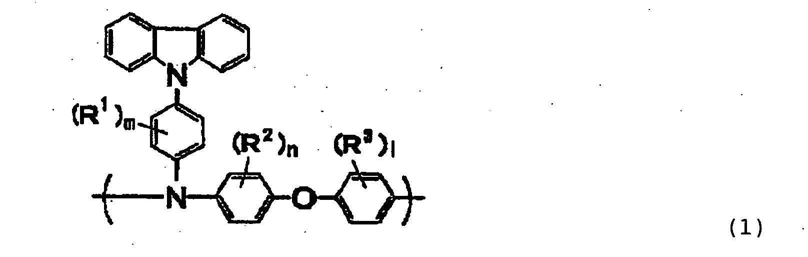 wherein R¹, R² and R³ are each a monovalent organic group, 1 is an integer of 0 to 4, m is an integer of 0 to 4, and n is an integer of 0 to 4.

A composition comprising the polymer and a triplet luminescent metal complex compound, and an organic EL device having a luminescent layer formed from the composition are also disclosed. The polymer is capable of forming an organic EL layer having high luminance by a wet process. The organic EL device has a luminescent layer having high luminance.

## Claims

1. A polymer for organic electroluminescent (EL) element, comprising a repeating unit represented by the following structural formula (1): 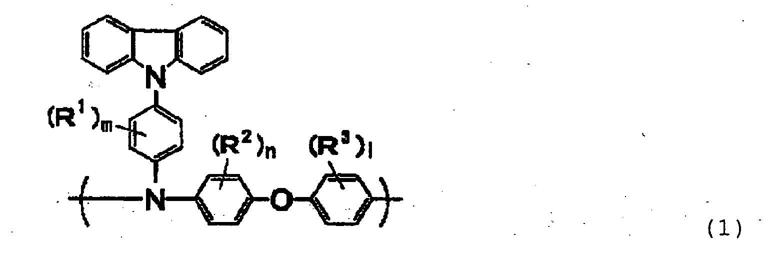 wherein R¹, R² and R³ are each a monovalent organic group, 1 is an integer of 0 to 4, m is an integer of 0 to 4, and n is an integer of 0 to 4.

2. The polymer for organic EL device as claimed in claim 1, having a weight-average molecular weight in terms of polystyrene, as measured by gel permeation chromatography, of 2000 to 1000000.

3. A composition for organic EL device, comprising the polymer for organic EL device of claim 1 or claim 2 and a triplet luminescent metal complex compound.

4. An organic EL device having a luminescent layer formed from the composition for organic EL device of claim 3.

5. The organic EL device as claimed in claim 4, further having a hole block layer.
